# EUROPÄISCHE PATENTSCHRIFT

(11) **EP 0 958 876 B1**
(45) Veröffentlichungstag und Bekanntmachung des Hinweises auf die Patenterteilung: **03.07.2002**
(21) Anmeldenummer: 99109129.9
(22) Anmeldetag: 08.05.1999
(51) Int. Cl.: B23D 33/02, B21D 43/28

(54) **Verfahren und Vorrichtung zum Aussortieren von Unterlängen in Feinstahladjustagen**
Apparatus and method for sorting to length of cut bars
Dispositif pour trier selon la longueur des barres coupées

(30) Priorität: 16.05.1998 DE 19822147
(43) Veröffentlichungstag der Anmeldung: 24.11.1999
(73) Patentinhaber: SMS Demag AG, 40237 Düsseldorf (DE)
(72) Erfinder: Hellenbrandt, Rainer, 47877 Willich (DE)
(74) Vertreter: Valentin, Ekkehard, Dipl.-Ing.

(56) Entgegenhaltungen:
- DE-B- 1 243 404
- FR-A- 2 358 232

## Beschreibung

Die Erfindung betrifft ein Verfahren und eine Vorrichtung zum Aussortieren von Unterlängen in Feinstahladjustagen, mit einer Trenneinrichtung, z. B. einer Kaltschere, die eine Schneidebene aufweist, der sich ein angetriebener Rollgang mit einem durch vorzugsweise Anheben entfernbaren, auf die gewünschte Länge einstellbaren Längenanschlag für das abzulängende Walzgut anschließt.

Im Bereich hinter Kaltscheren und Trennschneidmaschinen treten in den letzten Schneidlagen immer Unterlängen auf, die durch nachfolgende, meist umfangreiche Vorrichtungen mehr oder weniger gut aussortiert werden. Diese Vorrichtungen bestehen aus zusätzlichen Rollgängen mit Sammelmulden und Klemm- oder Auszieheinheiten, die einen erheblichen Bauaufwand darstellen. Hinzu kommt, dass sie teilweise von Hand bedient werden müssen.

In der deutschen Patentschrift 1 243 404 werden ein Verfahren und eine Vorrichtung zum maschinellen Aussortieren von Unterlängen aus einer Gruppe von Schnittlängen beschrieben. Das Verfahren besteht darin, dass die Gruppe von Schneidlängen nach dem Abschneiden durch eine Kaltschere an beiden Enden eingespannt und etwa in der Mitte, jedoch vor dem freien Ende der kürzesten Unterlänge von unten von der Förderebene abgehoben wird. Danach werden die frei aufgerichteten Enden der Unterlänge erfasst und die Unterlängen beim Abtransport der Schnittlängen zurückgehalten.

Dieses Verfahren ist funktionsfähig, jedoch sehr aufwendig, denn die Vorrichtung zur Ausübung des Verfahrens besteht unter Verwendung einer Kaltschere mit einem dem Obermesser zugeordneten heb- und senkbaren Niederhalter, einem der Schere nachgeordneten Scherenrollgang und einem verfahrbaren, in Abstand der gewünschten Handelslänge einstellbaren Vorstoßwagen, aus einem dem Vorstoßwagen zugeordneten, an sich bekannten, unabhängig steuerbaren, heb- und senkbaren Niederhalter und aus im Bereich des Scherenrollganges zwischen der Rollenteilung der Förderrollen angeordneten, unabhängig von einander in vertikaler Ebene heb- und senkbaren Hubleisten und aus längs der Verfahrbahn des Vorstoßwagens über der Förderebene längs des Förderweges angeordneten, verfahrbaren, heb- und senkbaren elektrischen Hubmagneten.

Der Erfindung liegt die Aufgabe zugrunde, ein Verfahren und eine Vorrichtung zum Aussortieren von Unterlängen in Feinstahladjustagen zu schaffen, die sich durch geringen Bauaufwand und einfache Handhabung auszeichnen.

Die Aufgabe wird dadurch gelöst, dass die Schnittlängen des am Längenanschlag anliegenden Walzgutes nach dem Ablängen in der Trenneinrichtung festgehalten werden, bis die Unterlängen nach Anheben des Längenanschlages von dem angetriebenen Rollgang abtransportiert worden sind. Das Verfahren ist sehr einfach, da die Schnittlängen nur an der Schnittstelle in der Kaltschere festgehalten und nach Abtransport der Unterlängen auf dem normalen Wege weiter transportiert werden. Dabei ist eine elektronische überwachung der Bewegung der Unterlängen hinter dem Längenanschlag zweckmäßig. Kurz nach dem die Unterlängen den Längenanschlag passiert haben, oder, falls keine Unterlängen vorhanden sind, kurz nach Anheben des Längenanschlags werden die Schnittlängen von der Überwachung freigegeben. Damit ist das Aussortieren der Unterlängen nur mit einer kurzzeitigen Verzögerung des sonst unveränderten Materialflusses verbunden.

Dadurch, dass die Unterlängen hinter dem Längenanschlag in Sammelmulden oder auf Ablageroste abgelegt werden, unterliegen die Unterlängen, getrennt für sich, dem normalen Transport durch die Adjustage. Auf diese Weise entfällt jegliche Handarbeit bei der Behandlung der Unterlängen.

Es ist vorteilhaft, dass bei einer Vorrichtung zum Aussortieren von Unterlängen in Feinstahladjustagen, die eine Trenneinrichtung, z. B. eine Kaltschere oder eine Trennschneidmaschine aufweist, der sich ein angetriebener Rollgang mit einem anhebbaren und auf die gewünschte Länge einstellbaren Längenanschlag für das abzulängende Walzgut anschließt, ein Drucksteller unterhalb der scherenseitigen Enden der Schnittlängen angeordnet ist, durch den diese in Druckkontakt mit einem Anschlag bringbar sind. Die erfindungsgemäße Vorrichtung verursacht nur geringen Beschaffungsaufwand und niedrige Herstellkosten, da die vorhandenen Einrichtungen benutzt werden und keine getrennte Sortiervorrichtung für die Unterlängen erforderlich ist. Wenn das Obermesser der Kaltschere der Anschlag ist, entfällt auch die Notwendigkeit eines getrennten Anschlags.

Eine vorteilhafte Weiterbildung der Erfindung besteht darin, dass der Drucksteller einen Klemmbalken aufweist, der durch mindestens einen hydraulisch betätigten Klemmzylinder anhebbar und durch eine vertikale Führungsstange geführt ist. Die erforderliche Klemmkraft kann durch Verstellen des Hydraulikdrucks variiert werden. Sie kann auch auf pneumatische, mechanische oder magnetische Weise erzeugt werden. Die Führungsstange nimmt beim Transport der Schneidlängen die dabei in Transportrichtung auf den Klemmbalken wirkenden Kräfte auf. Dadurch bleiben die Hydraulikzylinder und deren Kolbenstangen frei von Biegekräften.

Es hat sich als vorteilhaft gezeigt, dass der Klemmbalken in seiner Oberseite eine L-förmige Längsnut aufweist, in die L-förmige Klemmstücke einsteckbar sind, die den Klemmbalken überragen und die auf einer elastischen Druckplatte im Nutengrund aufsitzen. Durch die L-Form von Längsnut und Klemmstücken ist deren radiale Arretierung sichergestellt. Wegen der elastischen Druckplatte passen sich die Klemmstücke den unterschiedlichen Querschnittsformen der Walzprodukte an, so dass der Klemmbalken universell verwendbar ist.

Dadurch, dass die L-förmige Längsnut eine im Vergleich zum Klemmbalken geringe Breite aufweist und nahe an dessen der Schneidebene zugewandten Seite angeordnet ist, wird erreicht, dass auch Unterlängen mit nur geringfügigem Längenunterschied zur Schnittlänge von den Klemmstücken nicht erfasst und dadurch aussortiert werden.

Im gleichen Sinne wirkt auch das Merkmal, dass die Seite des Klemmbalkens, die der Schneidebene zugewandt ist, vorzugsweise in dieser Schneidebene liegt.

Aufgrund der Tatsache, dass die Oberseite des Klemmbalkens der Kontur der Schneide des Obermessers angepasst ist, werden alle Schnittlängen auf der gesamten Breite des Obermessers von dem Klemmbalken erfasst und festgehalten.

Es ist für die Sauberkeit des Druckstellers von Vorteil, dass eine Abdeckvorrichtung für den Drucksteller vorgesehen ist, die ein schwenkbares Abdeckblech aufweist, dessen Schwenkwelle parallel zum Klemmbalken angeordnet ist. Auf diese Weise können kein Zunder oder andere Verunreinigungen auf den Klemmbalken und die Klemmstücke fallen. Durch das Wegschwenken der Abdeckvorrichtung wird diese immer wieder selbsttätig gereinigt. Der pneumatische Antrieb der Schwenkvorrichtung ist besonders unempfindlich, da Druckluftleckagen keine gravierenden Folgen haben.

Weitere Einzelheiten und Merkmale ergeben sich aus den Ansprüchen, aus der folgenden Beschreibung und der Zeichnung, in der ein Ausführungsbeispiel der Erfindung schematisch dargestellt ist.

Es zeigen:
- Fig. 1: eine teilweise geschnittene Seitenansicht der Vorrichtung mit einem der beiden Klemmzylinder,
- Fig. 2: eine teilweise geschnittene Seitenansicht der Vorrichtung mit einer Führungsstange,
- Fig. 3: eine Vorderansicht der Vorrichtung mit den zwei Klemmzylindern und der Führungsstange.

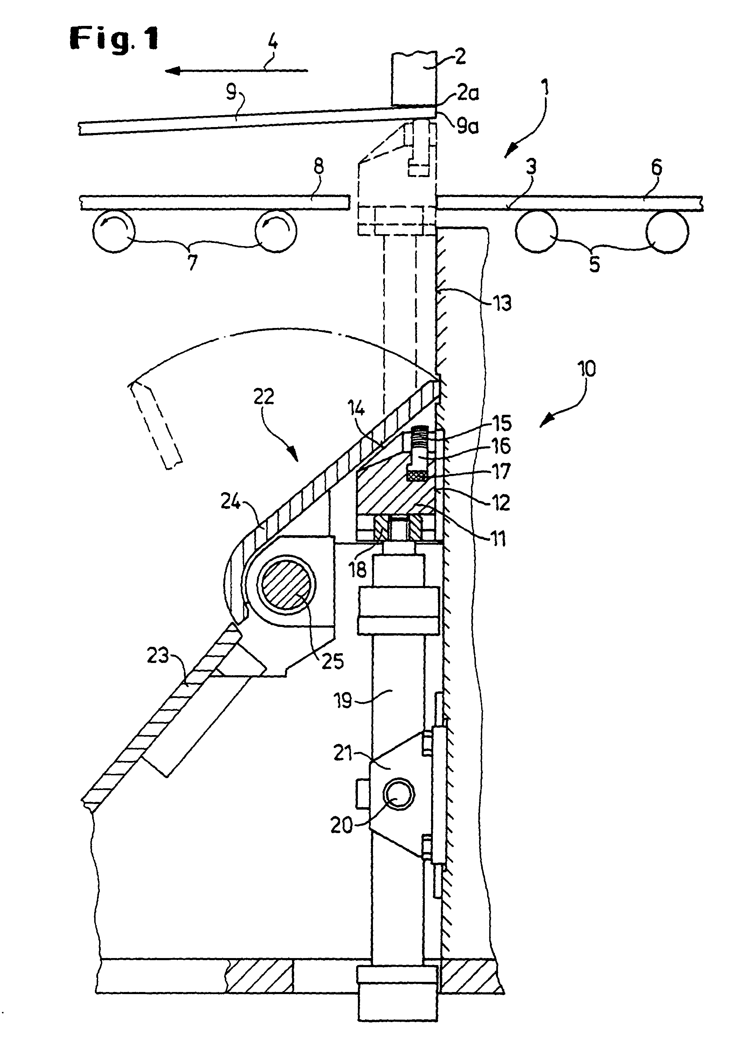

In Figur 1 ist ein Schnitt durch eine Kaltschere (1) mit einem Obermesser (2) und dem Niveau der Schneidkante (3) des Untermessers dargestellt, wobei die Schneidkante (2a) des Obermessers (2) in der Schneidebene (13) bewegbar ist. Die Transportrichtung des Walzguts wird durch einen Pfeil (4) angezeigt. Vor der Kaltschere (1) befindet sich ein Rollgang (5) mit dem abzulängenden Walzgut (6), hinter der Kaltschere (1) ein angetriebener Rollgang (7) mit einer Unterlänge (8) und einer eingeklemmten Schnittlänge (9). Diese liegen an einem nicht dargestellten Längenanschlag an, der längenverstellbar und durch Anheben entfernbar ist.

Unterhalb des Obermessers (2) ist ein Drucksteller (10) angeordnet. Dieser ist in Ruhestellung ausgezogen und in Betriebstellung gestrichelt dargestellt. Der Drucksteller (10) weist einen Klemmbalken (11) auf, der mit seiner der Schneidebene (13) zugewandten Seite (12) in der Schneidebene (13) des Obermessers (2) bewegbar ist. Auf der Oberseite (14) des Klemmbalkens (11) befindet sich in Nähe von dessen Seite (12) eine L-förmige Längsnut (15), in der L-förmige Klemmstücke (16) angeordnet sind. Diese überragen die L-förmige Längsnut (15) und sind in Druckkontakt mit einer elastischen Druckplatte (17), die sich auf dem Nutengrund befindet. Ausgehend von der Längsnut (15) ist die Oberseite (14) des Klemmbalkens (11) in Transportrichtung (4) abgeschrägt.

Der Klemmbalken (11) ist über je eine Druckmutter (18) mit zwei hydraulisch betätigbaren Klemmzylindern (19) verbunden. Diese sind über Schwenklager (20) und ZylinderkonsoLen (21) an der Kaltschere (1) befestigt.

Der Drucksteller (10) ist durch eine Abdeckvorrichtung (22) in seiner Ruhelage abdeckbar. Diese weist ein scherenfestes Abdeckblech (23) und ein schwenkbares Abdeckblech (24) auf, dessen Schwenkwelle (25) parallel zum Klemmbalken (11) angeordnet ist und dessen Schwenklage gestrichelt dargestellt ist.

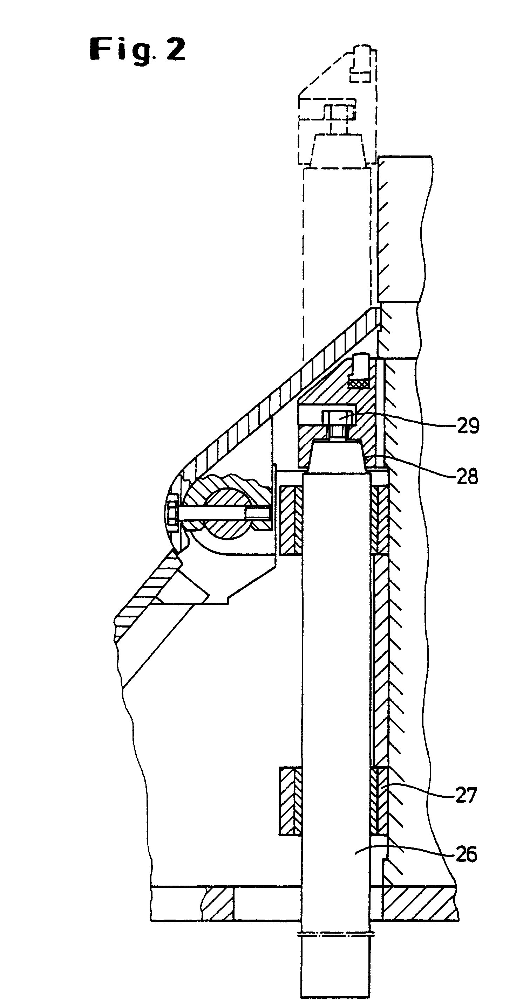

Zusätzlich zu den in Figur 1 bezeichneten Bauteilen ist in Figur 2 eine Führungsstange (26) dargestellt, die zwischen den Klemmzylindern (19) angeordnet und in einem scherenfesten Führungshalter (27) geführt ist. Die Führungsstange (26) ist über einen Konus (28) mit dem Klemmbalken (11) verbunden und durch eine Mutter (29) mit diesem verschraubt.

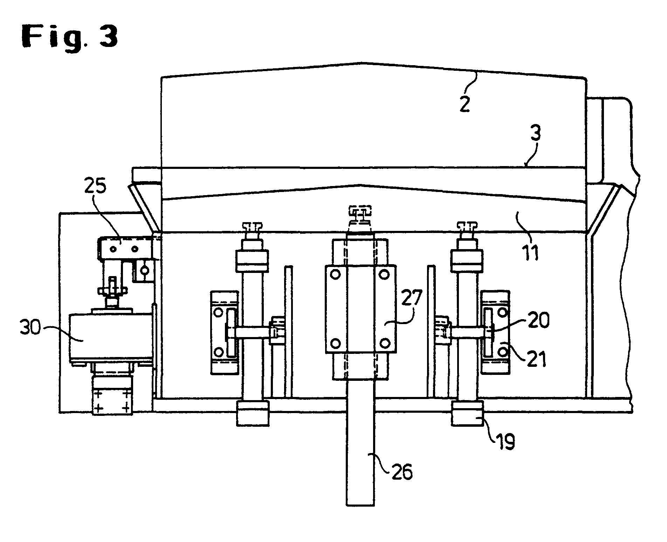

Figur 3 zeigt in Vorderansicht der erfindungsgemäßen Vorrichtung den Klemmbalken (11) mit den Klemmzylindern (19) und der Führungsstange (26). Die Schwenklager (20) mit den Zylinderkonsolen (21), der Klemmzylinder (19) und die Führungshalter (27) der Führungsstange (26) sind ebenfalls dargestellt. Die dachförmige Oberseite (14) des Klemmbalkens (11) liegt unterhalb der Schneidkante (3) des Untermessers und ist der Form des als Anschlag dienenden Obermessers (2) angepasst.

Die Abdeckvorrichtung (22) wird durch einen Druckluftzylinder (30) betätigt, der mit der Schwenkwelle (25) und dem daran befestigten, schwenkbaren Abdeckblech (24) verbunden ist.

Die erfindugsgemäße Vorrichtung funktioniert folgendermaßen:
vom Kühlbett des Walzwerks gelangt Walzgut über den Rollgang (5) zur Kaltschere (1). Da diese offen steht und der Drucksteller (10) abgesenkt ist, wird das Walzgut (6) einschließlich der Unterlängen (8) über den angetriebenen Rollgang (7) bis zu dem nicht dargestellten, einstellbaren und anhebbaren Längenanschlag gefördert.

Nach dem Ablängen des Walzguts (6) zu Schnittlängen (9) fährt das Obermesser (2) der Kaltschere (1) in seine obere Position. Danach schwenkt das schwenkbare Abdeckblech (24), betätigt durch den seitlich angeordneten Druckluftzylinder (30), in die Position "offen". Mit dem Erreichen dieser Position starten die Klemmzylinder (19) aus ihrer Grundstellung und heben gleichzeitig den Klemmbalken (11). Je nach Materialstärke erfolgt das Klemmen der Schnittlängen (9) zwischen Obermesser (2) und Klemmstück (17) früher oder später. Die benötigte Klemmkraft kann durch Variieren des Hydraulikdrucks eingestellt werden.

Mit dem Signal "geklemmt" startet der angetriebene Rollgang (7) und transportiert nach Anheben des Längenanschlags die Unterlängen (8) in die dafür vorgesehenen Einrichtungen.

Sobald die Unterlängen (8) den angetriebenen Rollgang (7) verlassen haben, werden dessen Rollen stillgesetzt. Dann fahren die Klemmzylinder (19) wieder in ihre Grundstellung, wodurch die Schnittlängen (9) wieder auf dem angetriebenen Rollgang (7) abgelegt werden.

Nach Erreichen der Grundstellung der Klemmzylinder (19) wird das schwenkbare Abdeckblech (24) pneumatisch in die Position "geschlossen" geschwenkt, wodurch der Drucksteller (10) vor Verschmutzung (z. B. Zunder) geschützt ist. Die jetzt auf dem angetriebenen Rollgang (7) liegenden Schnittlängen (9) (ohne Unterlängen (8)) sind bereit zum Abtransport.

Die erfindungsgemäße Vorrichtung, die selbstverständlich auch die Verarbeitung andersartiger Stangenware mit Unterlängen einschließt, gestattet mit geringem zusätzlichen Bau- und Bedienungsaufwand sowie ohne Handarbeit das Aussortieren von Unterlängen und deren Weiterlaufen über die Adjustage, ohne den normalen Behandlungsgang der Schnittlängen zu beeinträchtigen.

## Patentansprüche

1. Verfahren zum Aussortieren von Unterlängen (8) in Feinstahladjustagen, mit einer Trenneinrichtung, z. B. einer Kaltschere (1), die eine Schneidebene (13) aufweist und der sich ein angetriebener Rollgang (7), mit einem durch vorzugsweise Anheben entfernbaren, auf die gewünschte Länge einstellbaren Längenanschlag für das abzulängende Walzgut (6) anschließt, **dadurch gekennzeichnet, dass** die Schnittlängen (9) des am Längenanschlag anliegenden Walzgutes (6) nach dem Ablängen in der Trenneinrichtung festgehalten werden, bis die Unterlängen (8) nach Anheben des Längenanschlags von dem angetriebenen Rollgang (7) abtransportiert worden sind.

2. Verfahren nach Anspruch 1, **dadurch gekennzeichnet, dass** die Unterlängen (8) hinter dem Längenanschlag in Sammelmulden oder auf Ablegeroste abgelegt werden.

3. Vorrichtung zur Durchführung des Verfahrens nach Anspruch 1, zum Aussortieren von Unterlängen (8) in Feinstahladjustagen, mit einer Trenneinrichtung, z. B. einer Kaltschere (1), die eine Schneidebene (13) aufweist und der sich ein angetriebener Rollgang (7), mit einem durch vorzugsweise Anheben entfernbaren, auf die gewünschte Länge einstellbaren Längenanschlag für das abzulängende Walzgut (6) anschließt, **dadurch gekennzeichnet, dass** ein Drucksteller (10) unterhalb der scherenseitigen Enden (9a) von Schnittlängen (9) angeordnet ist, durch den diese in Druckkontakt mit einem Anschlag oberhalb der scherenseitigen Enden (9a) der Schnittlängen (9) bringbar sind.

4. Vorrichtung nach Anspruch 3, **dadurch gekennzeichnet, dass** das Obermesser (2) der Kaltschere (1) der Anschlag ist.

5. Vorrichtung nach Anspruch 3 oder 4, **dadurch gekennzeichnet, dass** der Drucksteller (10) einen Klemmbalken (11) aufweist, der durch mindestens einen hydraulisch betätigbaren Klemmzylinder (19) anhebbar und durch eine vertikale Führungsstange (26) geführt ist.

6. Vorrichtung nach Anspruch 5, **dadurch gekennzeichnet, dass** der Klemmbalken (11) in seiner Oberseite (14) eine L-förmige Längsnut (15) aufweist, in die L-förmige Klemmstücke (16) einsteckbar sind, die den Klemmbalken (11) überragen und die auf einer elastischen Druckplatte (17) im Nutengrund aufsitzen.

7. Vorrichtung nach Anspruch 6, **dadurch gekennzeichnet, dass** die L-förmige Längsnut (15) eine im Vergleich zum Klemmbalken (11) geringe Breite aufweist und nahe an dessen der Schneidebene (13) zugewandten Seite (12) angeordnet ist.

8. Vorrichtung nach einem oder mehreren der Ansprüche 5 bis 7, **dadurch gekennzeichnet, dass** die Seite (12) des Klemmbalkens (11) vorzugsweise in der Schneidebene (13) liegt.

9. Vorrichtung nach einem oder mehreren der Ansprüche 5 bis 8, **dadurch gekennzeichnet, dass** die Oberseite (14) des Klemmbalkens (11) der Kontur der Schneide des Obermessers (2) angepasst ist.

10. Vorrichtung nach einem oder mehreren der Ansprüche 5 - 9, **dadurch gekennzeichnet, dass** eine Abdeckvorrichtung (22) für den Drucksteller (10) vorgesehen ist, die ein schwenkbares Abdeckblech (24) aufweist, dessen Schwenkwelle (25) parallel zum Klemmbalken (11) angeordnet ist.

## Claims

1. A method for sorting out underfootages (8) in finishing departments of small section rolling mills, with a separating device, e.g., cold shears (1), that produces cuts along a cutting plane (13) and behind which a live roller table (7) is arranged, wherein said roller table contains a length stop for the rolling stock (6) to be cut into sections, and wherein said length stop can be adjusted to the desired length and removed, preferably by being raised, **characterized by** the fact that the cut sections (9) of the rolling stock (6) which adjoin the length stop are held in position after they are cut to the desired length in the separating device, namely until the underfootages (8) are transported away by the live roller table (7) after raising the length stop.

2. A method according to claim 1, **characterized by** the fact that the underfootages (8) are deposited in collecting troughs or on receiving grates behind the length stop.

3. A device for carrying out the method according to claim 1 for sorting out underfootages (8) in finishing departments of small section rolling mills, with a separating device, e.g., cold shears (1), that produces cuts along a cutting plane (13) and behind which a live roller table (7) is arranged, wherein said roller table contains a length stop for the rolling stock (6) to be cut into sections, and wherein said length stop can be adjusted to the desired length and removed, preferably by being raised, **characterized by** the fact that a pressure actuator (10) is arranged underneath the ends (9a) of the cut sections (9) which are situated on the side of the shears, wherein said pressure actuator is able to press the cut sections against a stop arranged above the ends (9a) of the cut sections (9) which are situated on the side of the shears.

4. A device according to claim 3, **characterized by** the fact that the upper knife (2) of the cold shears (1) forms the stop.

5. A device according to claim 3 or 4, **characterized by** the fact that the pressure actuator (10) contains a clamping beam (11) that can be raised by means of at least one hydraulically actuated clamping cylinder (19) and is guided by a vertical guide rod (26).

6. A device according to claim 5, **characterized by** the fact that the clamping beam (11) contains a L-shaped longitudinal groove (15) in its upper side (14), wherein L-shaped clamping elements (16) that protrude over the clamping beam (11) and are seated on an elastic pressure plate (17) on the base of the groove can be inserted into the aforementioned longitudinal groove.

7. A device according to claim 6, **characterized by** the fact that the L-shaped longitudinal groove (15) has a smaller width than the clamping beam (11) and is arranged near the side (12) of the clamping beam which faces the cutting plane (13).

8. A device according to at least one of claims 5-7, **characterized by** the fact that the side (12) of the clamping beam (11) preferably lies in the cutting plane (13).

9. A device according to at least one of claims 5-8, **characterized by** the fact that the upper side (14) of the clamping beam (11) is adapted to the contour of the blade of the upper knife (2).

10. A device according to at least one of claims 5-9, **characterized by** the fact that a cover element (22) is provided for the pressure actuator (10), wherein said cover element contains a pivoted cover plate (24), the pivoting axis (25) of which is arranged parallel to the clamping beam (11).

## Revendications

1. Procédé pour le tri de segments (8) dans des ajustages d'acier fin, avec un dispositif de séparation, par exemple une cisaille à froid (1) qui présente un plan de coupe (13) et auquel est connectée une table à rouleaux motorisée (7) avec une butée de longueur pouvant être enlevée en la soulevant de préférence, réglable à la longueur souhaitée pour le laminé (6) à tronçonner, **caractérisé en ce que** les longueurs coupées (9) du laminé (6) posé sur la butée de longueur sont maintenues après le tronçonnage dans le dispositif de séparation, jusqu'à ce que les segments (8) aient été évacués, après la levée de la butée de longueur, de la table à rouleaux motorisée (7).

2. Procédé selon la revendication 1, **caractérisé en ce que** les segments (8) sont déposés derrière la butée de longueur dans des bacs de regroupement ou sur des grilles de dépôt.

3. Dispositif pour la réalisation du procédé de la revendication 1, pour le tri de segments (8) dans des ajustages d'acier fin, avec un dispositif de séparation, par exemple une cisaille à froid (1), qui présente un plan de coupe 13) et auquel est connectée une table à rouleaux motorisée (7) avec une butée de longueur pouvant être enlevée en la soulevant de préférence, réglable à la longueur souhaitée pour le laminé (6) à tronçonner, **caractérisé en ce qu'**un régleur de pression (10) est disposé en dessous des extrémités (9a) des segments (9) situées du côté de la cisaille (9a), au moyen duquel ceux-ci peuvent être mis en contact de pression avec une butée au dessus des extrémités (9a) des segments (9) situées du côté de la cisaille.

4. Dispositif selon la revendication 3, **caractérisé en ce que** le couteau supérieur (2) de la cisaille à froid (1) est la butée.

5. Dispositif selon la revendication 3 ou 4, **caractérisé en ce que** le régleur de pression (10) présente une barre de blocage (11), qui peut être levée par au moins un cylindre de blocage (.19) pouvant être entraîné par hydraulique et est guidée par une tige verticale de guidage (26).

6. Dispositif selon la revendication 5, **caractérisé en ce que** la barre de blocage (11) présente, dans sa partie supérieure (14), une gorge longitudinale en forme de L (15) dans laquelle peuvent être enclenchées les pièces de blocage en forme de L (16) qui dépassent de la barre de blocage (11) et reposent sur une plaque de compression élastique (17) au fond de la gorge.

7. Dispositif selon la revendication 6, **caractérisé en ce que** la gorge longitudinale en forme de L (15) présente une largeur faible comparativement à la barre de blocage (11) et est disposée près du côté (12) tourné vers le plan de coupe (13) de celle-ci.

8. Dispositif selon une ou plusieurs des revendications 5 à 7, **caractérisé en ce que** le côté (12) de la barre de blocage (11) se situe de préférence dans le plan de coupe (13).

9. Dispositif selon une ou plusieurs des revendications 5 à 8, **caractérisé en ce que** la face supérieure (14) de la barre de blocage (11) est adaptée au contour de la coupe du couteau supérieur (2).

10. Dispositif selon une ou plusieurs des revendications 5 à 9, **caractérisé en ce qu'**un dispositif de recouvrement (22) qui présente une tôle de recouvrement pouvant pivoter (24), dont l'arbre de pivotement (25) est parallèle à la barre de blocage (11), est prévu pour le régleur de pression (10).
